**Europäisches Patentamt**

**European Patent Office**

**Office européen des brevets**

(11) Veröffentlichungsnummer: **0 028 807**

**A1**

(12) **EUROPÄISCHE PATENTANMELDUNG**

(21) Anmeldenummer: **80106819.8**

(22) Anmeldetag: **05.11.80**

(51) Int. Cl.³: **G 01 F 17/00**

(30) Priorität: **09.11.79 DE 2945356**

(43) Veröffentlichungstag der Anmeldung:
**20.05.81 Patentblatt 81/20**

(84) Benannte Vertragsstaaten:
**CH FR GB IT LI SE**

(71) Anmelder: **SIEMENS AKTIENGESELLSCHAFT Berlin und München**
**Postfach 22 02 61**
**D-8000 München 22(DE)**

(72) Erfinder: **Heinzl, Alfred, Ing.grad.**
**Geigenberger Strasse 29**
**D-8000 München 71(DE)**

(72) Erfinder: **Stadler, Heinz**
**Mettnauer Strasse 19**
**D-8000 München 60(DE)**

(54) **Verfahren und Vorrichtung zur Messung des Füllvolumens in einem geschlossenen Behälter.**

(57) Zur Konstanthaltung des Füllstandes von Gießharz (3) in einem Vielfachgießkopf wird berührungsfrei das Füllvolumen gemessen. Zu diesem Zweck wird der Vorratsraum (2) nach jedem Gießvorgang mit einem Prüfdruck (pp) beaufschlagt und danach mit einem Überströmgefäß (13) verbunden. Im Überströmgefäß (13) stellt sich ein Meßdruck (pM) ein, der ein Maß für den Füllungszustand des Vorratsraums (2) ist. Daraus läßt sich ein Signal für eine Nachfüllautomatik ableiten.

FIG 1

EP 0 028 807 A1

Croydon Printing Company Ltd

SIEMENS AKTIENGESELLSCHAFT     Unser Zeichen
Berlin und München          VPA 79 P 2 4 0 9 EUR

Verfahren und Vorrichtung zur Messung des Füllvolumens in einem geschlossenen Behälter

Die Erfindung bezieht sich auf ein Verfahren zur Füllstandsmessung in einem geschlossenen Behälter sowie auf eine Vorrichtung zur Durchführung dieses Verfahrens.

Bei einem geschlossenen Vorratsbehälter, aus dem laufend unterschiedliche Mengen des Füllstoffes entnommen werden, ist es notwendig, den Füllstand immer wieder zu kontrollieren, um rechtzeitig den Vorrat ergänzen zu können. Meist handelt es sich dabei um flüssige Füllstoffe, wie beispielsweise Gießharz in einer Gießeinrichtung, mit welcher etwa elektrische Bauelemente vergossen werden.

Zur Kontrolle von Füllständen gibt es zwar verschiedene Methoden und Einrichtungen, beispielsweise kapazitive Schaltsonden, Schwimmschalter, Tauchsonden und dergleichen. Eine Anwendung dieser Methoden ist jedoch verschiedentlich nicht möglich, da hierbei jeweils eine Berührung des Füllmediums mit dem Meßfühler erfolgt. Eine solche

Pr 1 Fra / 7.11.1979

Berührung muß jedoch in bestimmten Fällen vermieden werden, da beispielsweise Gießharz an dem Meßfühler anhärten und diesen damit unbrauchbar machen würde.

Aufgabe der Erfindung ist es deshalb, eine Methode zur Messung des Füllvolumens in einem geschlossenen Behälter anzugeben, bei der eine Berührung zwischen Meßsystem und Füllmedium vermieden wird. Außerdem soll die Messung auch bei sehr kleinen Behältern und bei Füllmedien unterschiedlichster Viskosität anwendbar sein.

Erfindungsgemäß wird diese Aufgabe dadurch gelöst, daß der Behälter mit einem definierten Prüfdruck beaufschlagt wird, daß danach ein Druckausgleich zwischen dem Behälter und einem Überströmgefäß hergestellt wird und daß aus dem im Überströmgefäß sich einstellenden Meßdruck das Füllvolumen des Behälters ermittelt wird.

Durch dieses erfindungsgemäße Verfahren ist es möglich, das Füllvolumen in einem geschlossenen System festzustellen, ohne irgendwelche Meßfühler in den Behälter einzubringen. Das Meßverfahren beruht auf der Tatsache, daß der Meßdruck in einem Überströmgefäß umso höher wird, je größer das Luftvolumen im Behälter und je kleiner dementsprechend das Füllvolumen im Behälter ist. Zweckmäßigerweise steht dabei das Überströmgefäß unter Atmosphärendruck. Nach jedem Meßvorgang kann außerdem durch Anlegen von Atmosphärendruck sowohl der Behälter als auch das Überströmgefäß entlüftet werden. Mit dem im Überströmgefäß erzeugten Meßdruck kann in einer vorteilhaften Ausführungsform der Erfindung ein Signal für eine Nachfülleinrichtung erzeugt werden.

Zur Durchführung des erfindungsgemäßen Verfahrens ist zweckmäßigerweise eine Ventileinrichtung mit mindestens einem umschaltbaren Ventil vorgesehen, wobei mit dieser Ventileinrichtung wahlweise ein Prüfdruck oder ein Überströmgefäß an den geschlossenen Behälter anschaltbar ist. Die Ventileinrichtung kann ein weiteres Ventil enthalten, mit welchem auch ein Arbeitsdruck an den geschlossenen Behälter anschaltbar ist. Mit einem derartigen Arbeitsdruck kann das Füllmedium aus dem geschlossenen Behälter ausgepreßt werden. Unter Umständen kann der Arbeitsdruck auch als Prüfdruck verwendet werden. Zweckmäßigerweise besitzt die Ventileinrichtung ein zusätzliches Entlüftungsventil.

In einer bevorzugten Ausführungsform ist das Überströmgefäß mit einem pneumatisch-elektrischen Wandler verbunden. Über einen solchen Wandler kann bei einem definierten Meßdruck ein Signal für eine Nachfülleinrichtung erzeugt werden.

Die Erfindung wird nachfolgend an einem Ausführungsbeispiel näher erläutert. Es zeigt

Fig. 1 einen geschlossenen Gießkopf für Gießharz mit einer Füllstandsmeßeinrichtung,

Fig. 2 bis 5 eine schematische Darstellung der Füllstandsmeßeinrichtung mit verschiedenen Schaltzuständen der Ventileinrichtung.

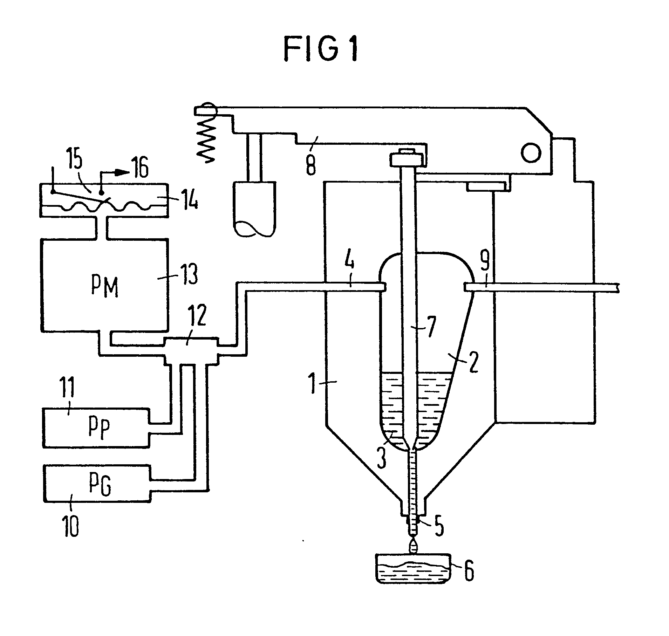

Das Ausführungsbeispiel zeigt die Anwendung der Erfindung auf eine automatische Nachfülleinrichtung für eine Vergießeinrichtung von elektrischen Bauelementen, wie Relais. Fig. 1 zeigt einen Gießkopf 1, der im Inneren einen geschlossenen Vorratsbehälter 2 bildet. Dieser Vorratsbehälter ist teilweise mit Gießharz 3 gefüllt. Über den Druckeingang 4 wird ein Gießdruck $p_G$ von einem Gießdruckgeber 10 angelegt, womit das Gießharz über eine oder mehrere Düsen 5 ausgepreßt wird. Damit werden beispielsweise Relais 6 vergossen. Das Ventil 7 dient dabei dazu, in nicht weiter beschriebener Weise den Gießvorgang dann zu beenden, wenn das betreffende Bauteil gefüllt ist. Dieses Ventil 7 wird über eine Hebelvorrichtung 8 betätigt.

Von Zeit zu Zeit muß der Vorrat an Gießharz im Vorratsbehälter 2 ergänzt werden. Dies geschieht über eine nicht weiter dargestellte Nachfülleinrichtung, von der über den Eingang 9 Gießharz eingefüllt wird. Um die Nachfülleinrichtung automatisch immer zum richtigen Zeitpunkt in Gang zu setzen, muß laufend das Füllvolumen im Vorratsbehälter 2 ermittelt werden. Dabei darf aber keine Meßsonde verwendet werden, die das Gießharz im Vorratsbehälter 2 berührt, da dieses an der Sonde anhärten würde.

Zur Messung des Füllvolumens wird von einem Prüfdruckgeber 11 ein Prüfdruck $p_P$ über ein Ventilsystem 12 an den Vorratsbehälter 2 angelegt. Danach wird die Ventileinrichtung 12 umgeschaltet, so daß der Vorratsbehälter 2 mit dem unter Atmosphärendruck stehenden Überströmgefäß 13 verbunden wird. Der Druck zwischen beiden Gefäßen gleicht sich aus und es stellt sich ein Meßdruck $p_M$ nach folgender Beziehung ein:

$$p_M = \frac{p_P \cdot V_2}{V_2 + V_{13}}$$

Dabei ist $V_2$ das Luftvolumen im Vorratsbehälter 2 des Gießkopfes und $V_{13}$ das Volumen des Überströmgefäßes 13. Der Meßdruck $p_M$ ist ein Maß für den Füllzustand des Gießkopfes. Die Auswertung dieses Meßdruckes erfolgt über einen pneumatisch-elektrischen Wandler 14, der mit dem Überströmgefäß 13 in Verbindung steht. Übersteigt der Meßdruck $p_M$ den Einschaltdruck des Wandlers 14, so schließt sich dessen Schalter 15 und gibt damit über den Signalausgang 16 ein Signal an eine Förderpumpe in der nicht dargestellten Nachfülleinrichtung.

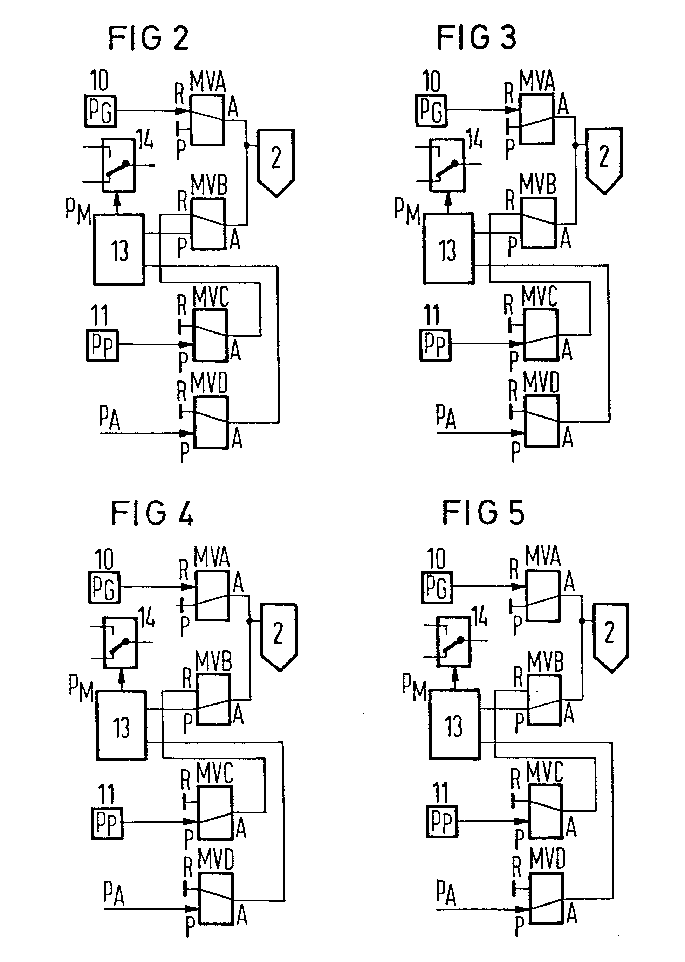

In den Fig. 2 bis 5 wird schematisch der Aufbau und die Funktion der Ventileinrichtung 11 mit ihren verschiedenen Schaltzuständen erläutert. Die Ventileinrichtung 11 besitzt vier Magnetventile MVA, MVB, MVC und MVD. Jedes Magnetventil hat zwei Eingänge P und R, welche wahlweise mit einem Ausgang A verbunden werden können. Die Zusammenschaltung der einzelnen Ventile untereinander und mit dem Vorratsbehälter 2 sowie mit dem Überströmgefäß 13 und dem pneumatisch-elektrischen Wandler 14 ist in Fig. 2 zu sehen. Das Magnetventil MVA ist mit einem Eingang R an den Prüfdruckgeber 11 anschließbar, das Magnetventil MVB ist mit seinem Eingang P an das Überströmgefäß, mit seinem Eingang R an den Ausgang A des Magnetventils MVC angeschlossen. Der eine Eingang P des Magnetventils MVC liegt am Prüfdruckgeber 11, während der Eingang P des Magnetventils MVD am Atmosphärendruck $p_A$ liegt.

Mit der Anordnung nach den Fig. 2 bis 5 können folgende Verfahrensschritte gesteuert werden:

1. Gießen (Fig. 2):
   Über das Magnetventil MVA liegt der Gießdruck $p_G$ am Gießkopf 1 bzw. dessen Vorratsbehälter 2 an. Durch die Düsen 5 wird das Gießharz ausgepreßt. Die übrigen Magnetventile sind geschlossen.

2. Umschalten zum Prüfvorgang (Fig. 3):
   Das Magnetventil MVA schaltet nach dem Gießvorgang den Gießdruck $p_G$ ab. Gleichzeitig schaltet das Magnetventil MVC ein, wodurch der Prüfdruck $p_P$ über das Magnetventil MVB an den Vorratsbehälter 2 angelegt wird.

3. Meßvorgang (Fig. 4):
   Das Magnetventil MVB schaltet den Eingang P zum Ausgang A. Dadurch strömt die Luft mit dem Prüfdruck $p_P$ vom Vorratsbehälter 2 in das Überströmgefäß 13; es stellt sich der Meßdruck $p_M$ im Überströmgefäß ein.

Ist dieser Meßdruck größer als der Einschaltdruck des angeschlossenen pneumatisch-elektrischen Wandlers 14, so wird über den Schalter 15 ein Signal zum Nachfördern von Gießharz an die Förderpumpe gegeben.

4. Entlüften von Gießkopf und Überströmgefäß (Fig. 5): Das Magnetventil MVB schaltet den Prüfdruck $p_P$ aus. Das Magnetventil MVD schaltet um auf den Atmosphärendruck, wodurch der Vorratsbehälter 2 und das Überströmgefäß 13 entlüftet werden. Dieser Zustand wird zweckmäßigerweise bis zum Beginn des nächsten Gießvorgangs beibehalten.

9 Patentansprüche
5 Figuren

Patentansprüche

1. Verfahren zur Messung des Füllvolumens in einem geschlossenen Behälter, d a d u r c h  g e k e n n -
z e i c h n e t , daß der Behälter (2) mit einem definierten Prüfdruck ($p_P$) beaufschlagt wird, daß danach ein Druckausgleich zwischen dem Behälter (2) und einem Überströmgefäß (13) hergestellt wird, und daß aus dem im Überströmgefäß (13) sich einstellenden Meßdruck ($p_M$) das Füllvolumen des Behälters (2) ermittelt wird.

2. Verfahren nach Anspruch 1, d a d u r c h  g e - k e n n z e i c h n e t , daß das Überströmgefäß (13) unter Atmosphärendruck ($p_A$) steht.

3. Verfahren nach Anspruch 1 oder 2, d a d u r c h g e k e n n z e i c h n e t , daß der Behälter (2) und das Überströmgefäß (13) nach jedem Meßvorgang durch Anlegen an Atmosphärendruck ($p_A$) entlüftet werden.

4. Verfahren nach einem der Ansprüche 1 bis 3, d a - d u r c h  g e k e n n z e i c h n e t , daß mit dem im Überströmgefäß (13) erzeugten Meßdruck ($p_M$) ein Signal für eine Nachfülleinrichtung erzeugt wird.

5. Vorrichtung zur Durchführung des Verfahrens nach einem der Ansprüche 1 bis 4, d a d u r c h  g e k e n n - z e i c h n e t , daß der geschlossene Behälter (2) mit einer umschaltbaren Ventileinrichtung (12) mit mindestens einem umschaltbaren Ventil (MVB, MVC) verbunden ist, mit welchem wahlweise ein Prüfdruckgeber (11) oder ein Überströmgefäß (13) an den Behälter (2) anschaltbar ist.

6. Vorrichtung nach Anspruch 5, d a d u r c h   g e -
k e n n z e i c h n e t , daß über die Ventileinrichtung (12) zusätzlich ein Gießdruckgeber (10) an den Behälter (2) anschaltbar ist.

7. Vorrichtung nach Anspruch 5 oder 6, d a d u r c h
g e k e n n z e i c h n e t , daß die Ventileinrichtung (12) zusätzlich ein Entlüftungsventil (MVD) besitzt.

8. Vorrichtung nach einem der Ansprüche 5 bis 7, d a -
d u r c h   g e k e n n z e i c h n e t , daß mit dem
Überströmgefäß (13) ein pneumatisch-elektrischer Wandler
(14) verbunden ist.

9. Vorrichtung nach einem der Ansprüche 5 bis 8, d a -
d u r c h   g e k e n n z e i c h n e t , daß der geschlossene Behälter (2) der Innenraum eines Gießkopfes
(1) für flüssiges Gießharz ist.

FIG 1

FIG 2

FIG 3

FIG 4

FIG 5

**Europäisches Patentamt**

**EUROPÄISCHER RECHERCHENBERICHT**

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| X | DE – C – 101 853 (C. WULBERN)<br><br>* Das ganze Dokument, insbesonderes Seite 2, rechte Spalte, letzter Absatz bis Seite 3, linke Spalte, vorletzter Absatz *<br><br>-- | 1-3,5 |
| | DE – C – 395 317 (H. DREHMANN)<br><br>* Seite 1, Zeile 7 bis letzte Zeile; Zeichnung *<br><br>-- | 1-3 |
| | DE – C – 800 434 (W. LEPPER)<br><br>* Seite 2, Zeilen 24-67; Zeichnung *<br><br>-- | 1-3,5 |
| | US – A – 3 895 519 (J.C. BOUCHY et al.)<br><br>* Spalte 1, Zeilen 5-24; Spalte 2, Zeile 19 bis Spalte 3, Zeile 52; Spalte 6, Zeile 54 bis Spalte 7, Zeile 11; Figur 1 *<br><br>-- | 1,4,5 8 |
| | US – A – 3 962 916 (J.C. BOUCHY et al.)<br><br>* Abriss; Spalte 1, Zeile 66 bis Spalte 4, Zeile 33; Zeichnung *<br><br>-- | 1,4,5 8 |
| | FR – A – 788 509 (J. DUCROT)<br><br>* Seite 1, Zeile 1 bis Seite 2, Zeile 28; Figur 1 *<br><br>--            ./. | 1,7 |

**KLASSIFIKATION DER ANMELDUNG (Int Cl )**

G 01 F 17/00

**RECHERCHIERTE SACHGEBIETE (Int Cl )**

G 01 F 17/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patentfamilie. übereinstimmendes Dokument

Der vorliegende Recherchenbericht wurde fur alle Patentanspruche erstellt.

| Recherchenort | Abschlußdatum der Recherche | Prüfer |
|---|---|---|
| Den Haag | 17-02-1981 | NENTWICH |

EPA form 1503.1   06.78

**Europäisches Patentamt**

**EUROPÄISCHER RECHERCHENBERICHT**

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der Maßgeblichen Teile | betrifft Anspruch | | |
| A | <u>DE - A - 2 737 069</u> (S. BRUCKL) <br> * Seite 4, Zeile 16 bis Seite 5, Zeile 13 * <br><br> -- | 1 | | |
| A | <u>DE - C - 897 331</u> (H. PLATZER) <br> * Seite 1, Zeile 1 bis Seite 2, Zeile 21; Seite 3, Zeilen 5-116; Zeichnung * <br><br> ----- | 1 | | RECHERCHIERTE SACHGEBIETE (Int. Cl.³) |

EPA Form 1503.2 06.78